# EUROPÄISCHE PATENTSCHRIFT

(11) **EP 2 788 233 B1**
(45) Veröffentlichungstag und Bekanntmachung des Hinweises auf die Patenterteilung: **14.12.2016**
(21) Anmeldenummer: 12772764.2
(22) Anmeldetag: 08.10.2012
(51) Int. Cl.: B60T 8/40

(54) **VERFAHREN ZUM BETREIBEN EINES MIT EINER PLUNGEREINRICHTUNG AUSGESTATTETEN BREMSSYSTEMS EINES FAHRZEUGS UND STEUERVORRICHTUNG FÜR EIN MIT EINER PLUNGEREINRICHTUNG AUSGESTATTETES BREMSSYSTEM EINES FAHRZEUGS**
METHOD FOR OPERATING A VEHICLE BRAKING SYSTEM EQUIPPED WITH A PLUNGER DEVICE, AND A CONTROL DEVICE FOR A VEHICLE BRAKING SYSTEM EQUIPPED WITH A PLUNGER DEVICE
PROCÉDÉ DE FONCTIONNEMENT D'UN SYSTÈME DE FREIN DE VÉHICULE ÉQUIPÉ D'UN ENSEMBLE PISTON PLONGEUR ET DISPOSITIF DE COMMANDE POUR UN SYSTÈME DE FREIN D'UN VÉHICULE, ÉQUIPÉ D'UN DISPOSITIF À PISTON PLONGEUR

(30) Priorität: 05.12.2011 DE 102011087689
(43) Veröffentlichungstag der Anmeldung: 15.10.2014
(73) Patentinhaber: Robert Bosch GmbH, 70442 Stuttgart (DE)
(72) Erfinder: MAYER, Jochen, 89537 Giengen An Der Brenz (DE)
(86) Internationale Anmeldenummer: PCT/EP2012/069825
(87) Internationale Veröffentlichungsnummer: WO 2013/083310

(56) Entgegenhaltungen:
- EP-A2- 2 100 784
- WO-A1-2011/098176
- WO-A1-2011/104056
- DE-A1- 19 604 134
- DE-A1-102009 000 577

## Beschreibung

Die Erfindung betrifft ein Verfahren zum Betreiben eines mit einer Plungereinrichtung ausgestatteten Bremssystems eines Fahrzeugs. Des Weiteren betrifft die Erfindung eine Steuervorrichtung für ein mit einer Plungereinrichtung ausgestattetes Bremssystem eines Fahrzeugs.

### Stand der Technik

In der EP 0 565 153 A1 ist ein Zug-Überwachungssystem beschrieben. Das Zug-Überwachungssystem hat eine Plungereinrichtung mit einem mit einer Flüssigkeit befüllbaren Hohlraum, welcher von einem entlang einer Verstellachse verstellbaren Plunger begrenzt ist. Ein in mindestens einer Radbremszange vorliegender Bremsdruck soll steigerbar sein, indem ein Bremsflüssigkeitsvolumen aus dem Hohlraum durch Verstellen des Plungers in die mindestens eine Radbremszange transferiert wird.

Des Weiteren sind in der WO 2011/098176 ein Verfahren zum Betreiben eines hydraulischen Bremssystems eines Fahrzeugs und eine Steuervorrichtung für ein hydraulisches Bremssystem eines Fahrzeugs beschirieben. Während einer Ausführung des Verfahrens wird nach einem Empfangen einer von einem fahrzeugeigenen Steuersystem bereitgestellten Vorgabe bezüglich einer Soll-Druckänderung in mindestens einem über mindestens einen Bremskreis mit einem Hauptbremszylinder verbundenen Radbremszylinder mindestens ein Abdichtelement abhängig von der Vorgabe in eine Abdichtstellung verstellt. Auf diese Weise wird mittels des mindestens einen Abdichtelements mindestens ein Verbindungskanal des Hauptbremszylinders zu einem Bremsmediumreservoir abgedichtet. Anschließend wird unter Berücksichtigung der Vorgabe eine Soll-Fördergröße für mindestens ein Bremsmedium-Förderelement festgelegt und das Bremsmedium-Förderelement zum Fördern eines Bremsmediumvolumens zwischen mindestens einem Speichervolumen und einem speicherexternen Volumen des mindestens einen Bremskreises entsprechend der festgelegten Soll-Fördergröße angesteuert.

### Offenbarung der Erfindung

Die Erfindung schafft ein Verfahren zum Betreiben eines mit einer Plungereinrichtung ausgestatteten Bremssystems eines Fahrzeugs mit den Merkmalen des Anspruchs 1, eine Steuervorrichtung für ein mit einer Plungereinrichtung ausgestattetes Bremssystem eines Fahrzeugs mit den Merkmalen des Anspruchs 8 und ein Bremssystem für ein Fahrzeug mit den Merkmalen des Anspruchs 14.

### Vorteile der Erfindung

Eine Plungereinrichtung weist einen Motor und ein Getriebe auf, welche dazu ausgelegt sind, eine Flüssigkeit aus der Plungereinrichtung in ein anderes Volumen entgegen einen darin vorliegenden Gegendruck unter einem Grenz-Gegendruck zu verschieben/transferieren. Übersteigt der Gegendruck jedoch den vorgegebenen/bauartbedingten Grenz-Gegendruck, so ist das Verschieben der Flüssigkeit aus der Plungereinrichtung in das Volumen herkömmlicher Weise oft nicht mehr ausführbar. Mittels der vorliegenden Erfindung kann die Flüssigkeit jedoch auch trotz eines Gegendrucks über dem vorgegebenen/bauartbedingten Grenz-Gegendruck in das Zielvolumen verschoben/ transferiert werden.

Mittels der vorliegenden Erfindung entfällt auch die Notwendigkeit, eine Plungereinrichtung, insbesondere deren Motor und/oder Getriebe, für ein Entgegenwirken eines Gegendrucks bis zu einem vergleichsweise hohen Grenz-Gegendruck auszulegen. Die vorliegende Erfindung kann somit zum Einsetzen einer kostengünstigen, wenig Bauraum benötigenden und/oder einen geringen Energieverbrauch aufweisende Plungereinrichtung in einem Bremssystem eines Fahrzeugs genutzt werden. Auf diese Weise sind auch der Energieverbrauch und die Schadstoffemission des damit ausgestatteten Fahrzeugs reduzierbar.

Bevorzugter Weise wird zum Reduzieren zumindest des Vordrucks in dem Bremskreis zumindest eine Ventileinrichtung des Bremssystems in einen zumindest teilgeöffneten Zustand gesteuert. Somit kann über die mindestens eine in den zumindest teilgeöffneten Zustand gesteuerte Ventileinrichtung Bremsflüssigkeit in mindestens eine Speicherkammer des Bremssystems und/oder in einem von der Plungereinrichtung beabstandeten Unterabschnitt/Restabschnitt des Bremssystems verschoben werden. Dies bewirkt ein verlässliches Reduzieren zumindest des Vordrucks in dem Bremskreis, sodass anschließend auf einfache Weise mittels der Plungereinrichtung das Bremsflüssigkeitsvolumen aus der Plungereinrichtung in den mindestens einen Bremskreis des Bremssystems transferiert werden kann.

Beispielsweise kann zum Reduzieren zumindest des Vordrucks in dem Bremskreis mindestens ein Radauslassventil als die mindestens eine Ventileinrichtung in den zumindest teilgeöffneten Zustand gesteuert werden. Dies bewirkt ein Verschieben von Bremsflüssigkeit aus dem mindestens einen Bremskreis mit dem mindestens einen in den zumindest teilgeöffneten Zustand gesteuerten Radauslassventil in mindestens eine Speicherkammer, wodurch der in dem jeweiligen Bremskreis vorliegende Bremsdruck vergleichsweise schnell reduziert wird.

Ebenso kann zum Reduzieren zumindest des Vordrucks in dem Bremskreis mindestens ein Hochdruckschaltventil und/oder ein Umschaltventil als die mindestens eine Ventileinrichtung in den zumindest teilgeöffneten Zustand gesteuert werden. Auf diese Weise ist zumindest der Vordruck des Bremskreises innerhalb einer vergleichsweise kurzen Zeit zumindest unter den Grenz-Gegendruck reduzierbar.

Als Alternative oder als Ergänzung dazu, kann auch zum Reduzieren zumindest des Vordrucks in dem Bremskreis eine mittels einer Bremskraftverstärkervorrichtung des Bremssystems aus mindestens einen verstellbaren Kolben eines Hauptbremszylinders des Bremssystems ausgeübte Bremsunterstützungskraft reduziert werden. Durch die Reduzierung der Bremsunterstützungskraft kann der in dem Hauptbremszylinder und in mindestens einem mit dem Hauptbremszylinder hydraulisch verbundenen Abschnitt des Bremskreises vorliegende Druck auf energiesparende Weise reduziert werden. Somit können mittels der hier beschriebenen Ausführungsform des Verfahrens ein Energieverbrauch und/oder eine Schadstoffemission eines damit betriebenen Fahrzeugs gesenkt werden.

In einer vorteilhaften Weiterbildung kann auch eine durch das Reduzieren zumindest des Vordrucks bewirkte Reduzierung einer Rückstellkraft, welche auf den mindestens einen verstellbaren Kolben des Hauptbremszylinders ausgeübt wird, durch eine Reduzierung der Bremsunterstützungskraft der Bremskraftverstärkervorrichtung des Bremssystems zumindest teilweise kompensiert werden. Man kann dies auch so umschreiben, dass mittels der Reduzierung der Bremsunterstützungskraft der mindestens eine verstellbare Kolben des Hauptbremszylinders in einer vor dem Reduzieren des Vordrucks vorliegende Position gehalten/zurückverstellt wird. Auf diese Weise ist verhinderbar, dass der Fahrer die Reduzierung des Vordrucks als ein "Weichwerden" des Bremsbetätigungselements bemerkt. Die hier beschriebene Weiterbildung gewährleistet somit ein vorteilhaftes Bremsbetätigungsgefühl (Pedalgefühl) für den Fahrer.

Als Ergänzung kann nach dem Reduzieren zumindest des Vordrucks in dem Bremskreis um eine Druckdifferenz und nach dem Transferieren des Bremsflüssigkeitsvolumens aus der Plungereinrichtung in den mindestens einen Bremskreis zumindest der Vordruck in dem Bremskreis um die Druckdifferenz gesteigert werden. Dadurch ist bewirkbar, dass das Bremssystem nach dem Ausführen der hier beschriebenen Verfahrensschritte in einem Systemzustand vorliegt, der einem Transferieren des Bremsflüssigkeitsvolumens aus der Plungereinrichtung in den mindestens einen Bremskreis entgegen einem Gegendruck über dem Grenz-Gegendruck entspricht. Das Bremssystem kann somit so betrieben werden, als wenn es keinen Grenz-Gegendruck geben würde.

Die in den oberen Absätzen beschriebenen Vorteile sind auch mit einer korrespondierenden Steuervorrichtung für ein mit einer Plungereinrichtung ausgestattetes Bremssystem eines Fahrzeugs gewährleistet.

Außerdem sind die oben beschriebenen Vorteile realisierbar mittels eines korrespondierenden Bremssystems für ein Fahrzeug.

### Kurze Beschreibung der Zeichnungen

Weitere Merkmale und Vorteile der vorliegenden Erfindung werden nachfolgend anhand der Figuren erläutert. Es zeigen:
- Fig. 1a bis 1d: vier schematische Darstellungen eines mittels einer ersten Ausführungsform des Verfahrens betriebenen Bremssystems;
- Fig. 2: eine schematische Darstellung eines mittels einer zweiten Ausführungsform des Verfahrens betriebenen Bremssystems; und
- Fig. 3: eine schematische Darstellung einer Ausführungsform der Steuervorrichtung.

### Ausführungsformen der Erfindung

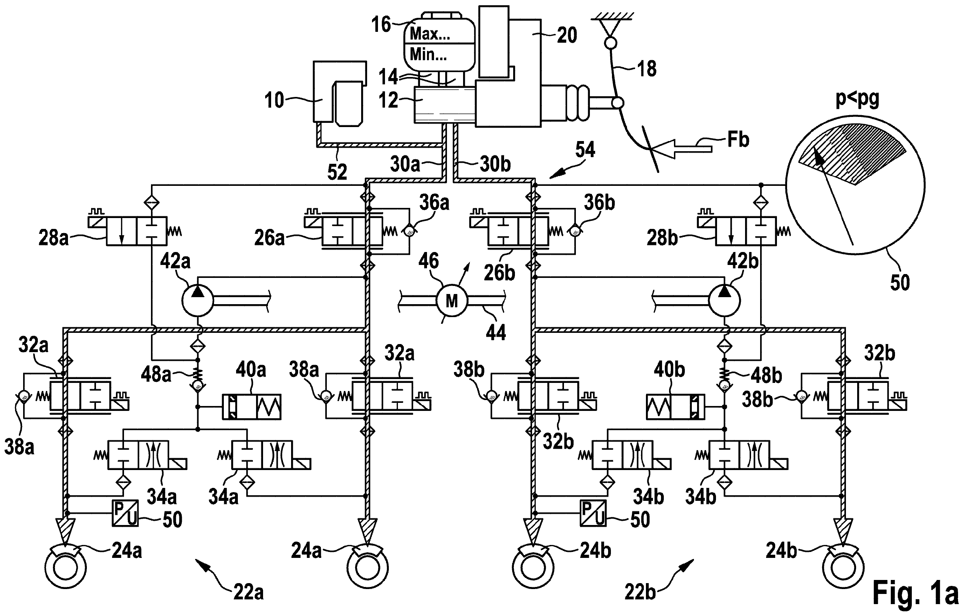

Fig. 1a bis 1d zeigen vier schematische Darstellungen eines mittels einer ersten Ausführungsform des Verfahrens betriebenen Bremssystems.

Das in den Fig. 1a bis 1d schematisch wiedergegebene Bremssystem ist zumindest mit einer Plungereinrichtung 10 ausgestattet. Unter der Plungereinrichtung 10 wird eine Einrichtung verstanden, deren mit Flüssigkeit befüllbares Speichervolumen von einem verstellbaren Plunger begrenzt wird. Zum Verstellen des Plungers weist die Plungereinrichtung 10 einen elektrischen Motor auf, welcher über ein Getriebe derart mit dem Plunger verbunden ist, dass der Plunger durch einen Betrieb des Motors in eine erste Verstellrichtung und in eine der ersten Verstellrichtung entgegen gerichtete zweite Verstellrichtung verstellbar ist. Durch das Verstellen des Plungers kann das Volumen des mit Flüssigkeit befüllbaren Speichervolumens der Plungereinrichtung 10 wahlweise vergrößert oder verkleinert werden. Durch das Vergrößern des Speichervolumens kann Bremsflüssigkeit aus dem mit der Plungereinrichtung 10 ausgestatteten Bremssystem in das Speichervolumen verschoben werden. Entsprechend kann durch das Verkleinern des Speichervolumens Bremsflüssigkeit aus der Plungereinrichtung 10 in das Bremssystem entgegen eines darin vorliegenden Gegendrucks gedrückt werden.

Das Bremssystem kann zusätzlich zu der Plungereinrichtung 10 noch die im Weiteren beschriebenen Komponenten umfassen. Es wird jedoch darauf hingewiesen, dass die Ausstattung des Bremssystems mit den zusätzlichen Komponenten optional ist. Insbesondere setzt die Ausführbarkeit des Verfahrens keine bestimmte Ausbildung der zusätzlichen Komponenten des Bremssystems voraus.

Das Bremssystem kann einen Hauptbremszylinder 12 aufweisen, welcher vorzugsweise über mindestens eine Austauschbohrung 14, wie beispielsweise eine Schnüffelbohrung, mit einem Bremsflüssigkeitsreservoir 16 verbunden ist. Ein Bremsbetätigungselement 18, wie beispielsweise ein Bremspedal, kann derart an dem Hauptbremszylinder 12 angeordnet sein, dass mittels einer auf das Bremsbetätigungselement 18 ausgeübten Fahrerbremskraft Fb mindestens ein verstellbarer Kolben des Hauptbremszylinders 12 so verstellbar ist, dass ein in dem Hauptbremszylinder 12 vorliegender Innendruck steigerbar ist. Als Ergänzung kann das Bremssystem auch eine Bremskraftverstärkervorrichtung 20 haben, mittels welcher eine zusätzliche Bremsunterstützungskraft auf den mindestens einen verstellbaren Kolben des Hauptbremszylinders 12 ausübbar ist. Die Bremskraftverstärkervorrichtung 20 kann eine hydraulische Aktoreinrichtung, eine elektromechanische Aktoreinrichtung und/oder eine pneumatische Aktoreinrichtung umfassen. Eine bestimmte Ausbildung der Bremskraftverstärkervorrichtung 20 ist für das Ausführen des unten beschriebenen Verfahrens nicht notwendig.

In den Fig. 1a bis 1d ist das Bremssystem als zweikreisiges Bremssystem mit einem ersten Bremskreis 22a und einem zweiten Bremskreis 22b dargestellt. Die Ausführbarkeit des unten beschriebenen Verfahrens ist jedoch nicht auf ein zweikreisiges Bremssystem mit jeweils zwei Radbremszangen 24a und 24b pro Bremskreis 22a und 22b limitiert. Stattdessen kann die Anzahl der Bremskreise 22a und 22b und/oder der Radbremszangen 24a und 24b an das mit dem Bremssystem ausgestattete Fahrzeug angepasst werden. Außerdem können die den Radbremszangen 24a und 24b eines Bremskreises 22a und 22b zugeordneten Räder an einer gemeinsamen Achse oder diagonal am Fahrzeug angeordnet sein.

Jeder der Bremskreise 22a und 22b kann jeweils ein Umschaltventil 26a und 26b und/oder ein Hochdruckschaltventil 28a und 28b aufweisen. Das Umschaltventil 26a oder 26b und/oder das Hochdruckschaltventil 28a oder 28b eines Bremskreises 22a oder 22b kann über eine Zuführleitung 30a oder 30b mit dem Hauptbremszylinder 12 verbunden sein. Außerdem kann jeder Radbremszange 24a und 24b noch jeweils ein Radeinlassventil 32a und 32b und ein Radauslassventil 34a und 34b zugeordnet sein. Parallel zu jedem Umschaltventil 26a kann eine Bypassleitung mit einem Rückschlagventil 36a und 36b verlaufen. Das jeweilige Rückschlagventil 36a und 36b ist diesem Fall so ausgerichtet, dass eine Bremsflüssigkeitsverschiebung von den angebundenen Radeinlassventilen 32a oder 32b zu dem Hauptbremszylinder 12 über die Bypassleitung unterbunden ist. Außerdem kann parallel zu jedem Radeinlassventil 32a und 32b eine weitere Bypassleitung mit einem Rückschlagventil 38a und 38b angeordnet sein. Mittels einer geeigneten Ausrichtung der Rückschlagventile 38a und 38b ist in diesem Falle eine Bremsflüssigkeitsverschiebung von der zugeordneten Radbremszange 24a oder 24b zu dem angebundenen Umschaltventil 26a oder 26b über die parallel zu dem Radeinlassventil 32a oder 32b geführte Bypassleitung möglich.

Bei der dargestellten Ausführungsform sind die Radbremszangen 24a und 24b eines Bremskreises 22a und 22b über die Radauslassventile 34a und 34b mit jeweils einer Speicherkammer 40a und 40b hydraulisch verbunden. Über ein Öffnen der zugeordneten Radauslassventile 34a und 34b kann somit Bremsflüssigkeit aus den Radbremszangen 24a und 24b eines Bremskreises 22a und 22b in die zugeordnete Speicherkammer 40a oder 40b verschoben werden. Jede der Speicherkammern 40a und 40b ist über jeweils eine Pumpe 42a und 42b mit einem Umschaltventil 26a oder 26b verbunden. Bei einer zweikreisigen Ausbildung des Bremssystems können die beiden Pumpen 42a und 42b an einer gemeinsamen Welle 44 eines Motors 46 angeordnet sein. Außerdem kann zwischen einer Speicherkammer 40a und 40b und einer damit hydraulisch verbundenen Pumpe 42a und 42b jeweils ein Rückschlagventil 48a und 48b angeordnet sein. Jede der Speicherkammern 40a und 40b kann über das zugeordnete Rückschlagventil 48a und 48b auch mit dem Hochdruckschaltventil 28a und 28b des zugehörigen Bremskreises 22a und 22b hydraulisch verbunden sein. Durch eine geeignete Ausrichtung der Rückschlagventile 48a und 48b ist trotz eines hohen Drucks an einer Pumpe 42a und 42b oder einem Hochdruckschaltventil 28a und 28b ein Transferieren von Flüssigkeit über das Rückschlagventil 48a und 48b in die hydraulisch angebundene Speicherkammer 40a oder 40b verhinderbar.

Anstelle einer gleichartigen Ausbildung der beiden Bremskreise 22a und 22b, wie in den Fig. 1a bis 1 d, kann das Bremssystem auch zwei verschieden ausgebildete Bremskreise 22a und 22b haben. Außerdem kann mindestens einer der Bremskreise 22a und 22b noch mit mindestens einer weiteren Komponente ausgestattet sein.

Bevorzugter Weise weist das mittels des im Weiteren beschriebenen Verfahrens betriebene Bremssystem mindestens einen Drucksensor 50 auf. Der mindestens eine Drucksensor 50 kann beispielsweise an einem Hochdruckschaltventil 28a und 28b und/oder an mindestens einer Radbremszange 24a und 24b angeordnet sein. Es wird darauf hingewiesen, dass die Ausführbarkeit des Verfahrens nicht auf die Verwendung einer bestimmten Anzahl von Drucksensoren 50 beschränkt ist.

In dem Bremssystem der Fig. 1a bis 1 d ist die Plungereinrichtung 10 über eine Leitung 52 an eine Zufuhrleitung 30a eines ersten Bremskreises 30a angebunden. Die Ausführbarkeit des im Weiteren beschriebenen Verfahrens setzt jedoch nicht eine derartige Anbindung der Plungereinrichtung 10 an das Bremssystem voraus.

Die Plungereinrichtung 10 kann dazu genutzt werden, einen in der mindestens einen Radbremszange 24a und 24b vorliegenden Bremsdruck wahlweise zu steigern oder zu senken. Beispielsweise kann die Plungereinrichtung 10 dazu genutzt werden, durch ein Herausdrücken von Bremsflüssigkeit aus der Plungereinrichtung 10 in den mindestens einen Bremskreis 22a und 22b ein hydraulisches Bremsmoment der Radbremszangen 24a und 24b zu steigern. Durch das Steigern des hydraulischen Bremsmoments der Radbremszangen 24a und 24b ist das damit ausgestattete Fahrzeug schneller abbremsbar.

In einer vorteilhaften Anwendungsmöglichkeit wird mittels eines Einsetzens der Plungereinrichtung 10 ein nicht-hydraulisches Zusatz-Bremsmoment, wie beispielsweise ein Generator-Bremsmoment eines (nicht dargestellten) Generators, verblendet. Über ein Herausdrücken von Bremsflüssigkeit aus der Plungereinrichtung 10 zu der mindestens einen Radbremszange 24a und 24b kann beispielsweise das hydraulische Bremsmoment der mindestens einen Radbremszange 24a und 24b so gesteigert werden, dass eine zeitliche Abnahme des nicht-hydraulischen Zusatz-Bremsmoments (zumindest teilweise) kompensiert wird. Ebenso kann durch ein Aufnehmen von Bremsflüssigkeit aus dem mindestens einen Bremskreis 22a und 22b in die Plungereinrichtung 10 das hydraulische Bremsmoment der mindestens einen Radbremszange 24a und 24b so abgesenkt werden, dass trotz einer zeitlichen Zunahme des nicht-hydraulischen Zusatz-Bremsmoments ein Gesamt-Bremsmoment aus dem hydraulischen Bremsmoment und dem nicht-hydraulischen Zusatz-Bremsmoment (zumindest nahezu) konstant bleibt. Es wird jedoch darauf hingewiesen, dass die Ausführbarkeit des im Weiteren beschriebenen Verfahrens nicht auf ein mit einem Generator ausgestattetes Bremssystem limitiert ist.

Mittels des Verfahrens kann ein Bremsdruck in dem mindestens einen Bremskreis 22a und 22b des Bremssystems gesteigert werden. Dies kann durch ein Transferieren eines Bremsflüssigkeitsvolumens aus der Plungereinrichtung 10 in den mindestens einen Bremskreis 22a und 22b erfolgen. Vor dem Transferieren des Bremsflüssigkeitsvolumens wird mindestens eine Ist-Druckgröße bezüglich eines vor dem Steigern des Bremsdrucks zumindest in einem Teilabschnitt des Bremssystems vorliegenden Ist-Drucks mit einer vorgegebenen Vergleichs-Druckgröße verglichen. Die mindestens eine Ist-Druckgröße kann beispielsweise eine von dem mindestens einen Drucksensor 50 bereitgestellte Sensorgröße sein. Ebenso kann die mindestens eine Ist-Druckgröße von einer Abschätz- und/oder Auswerteelektronik festgelegt/geschätzt sein. Das Festlegen/Abschätzen der mindestens einen Ist-Druckgröße kann insbesondere unter Berücksichtigung einer Bremsbetätigungsstärkegröße, wie z.B. der Fahrerbremskraft Fb, und/oder einer Füllstandsinformation bezüglich einer in das Speichervolumen der Plungereinrichtung 10 eingefüllten Bremsflüssigkeitsmenge ausführbar sein. Als Ist-Druckgröße kann somit auch anstelle eines Druckwerts eine Fahrerbremskraft-Füllstand-Relationsgröße verglichen werden. Die mindestens eine vorgegebene Vergleichs-Druckgröße kann einem Vergleichs-Druck entsprechen, ab dessen Vorliegen zumindest in der an die Leitung 52 angebunden Zufuhrleitung 30a ein Herausdrücken von Bremsflüssigkeit aus der Plungereinrichtung 10 in die Zufuhrleitung 30a kaum/nicht verlässlich ausführbar ist.

In der Regel ist eine Plungereinrichtung 10 dazu ausgelegt, bei einem Herausdrücken von Bremsflüssigkeit aus der Plungereinrichtung in ein Zielvolumen einem in dem Zielvolumen vorliegenden Gegendruck p entgegenzuwirken, so lange der Gegendruck p unter einem Grenz-Gegendruck pg liegt. Übersteigt der in dem Zielvolumen vorliegende Innendruck p den Grenz-Gegendruck pg, so ist häufig die über den elektrischen Motor und das Getriebe auf den Plunger aufbringbare Kraft nicht mehr ausreichend, um Bremsflüssigkeit durch ein Verstellen des Plungers entgegen dem Gegendruck p in das Zielvolumen zu drücken. Die Vergleichs-Druckgröße kann deshalb insbesondere dem Grenz-Gegendruck pg entsprechen.

Es wird jedoch darauf hingewiesen, dass die zum Vergleichen vorgegebene Vergleichs-Druckgröße nicht auf einen für die Plungereinrichtung 10 spezifischen Grenz-Gegendruck pg limitiert ist. Stattdessen kann die Vergleichs-Druckgröße auch einer Relation einer Fahrerbremskraft Fb und einer Ladezustandsinformation der Plungereinrichtung 10 entsprechen, ab welcher mit einem Gegendruck p größer oder gleich dem Grenz-Gegendruck pg zu rechnen ist. Als Vergleichs-Druckgröße kann somit anstelle eines Druckwerts auch eine Fahrerbremskraft-Füllstand-Vergleichsgröße herangezogen werden.

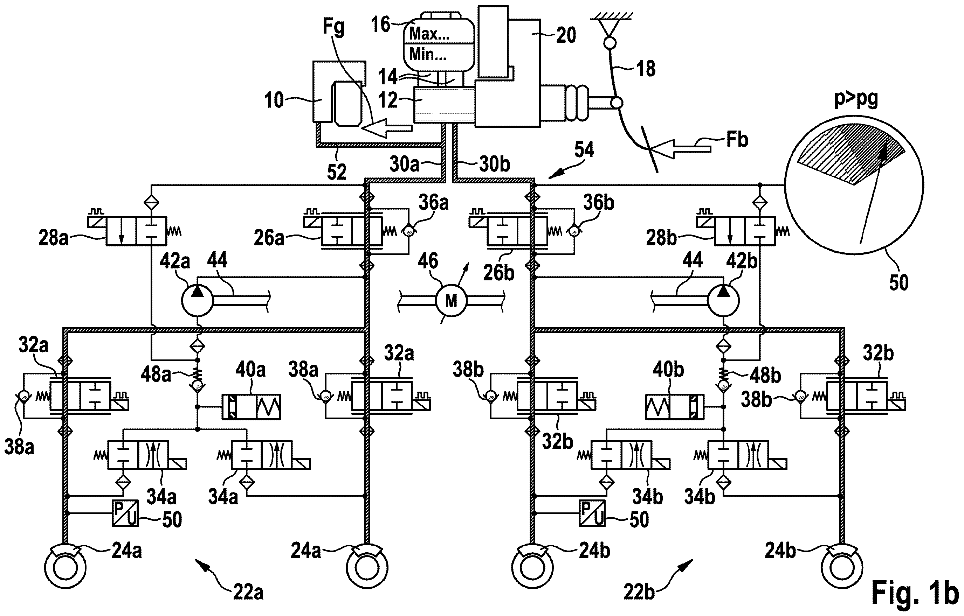

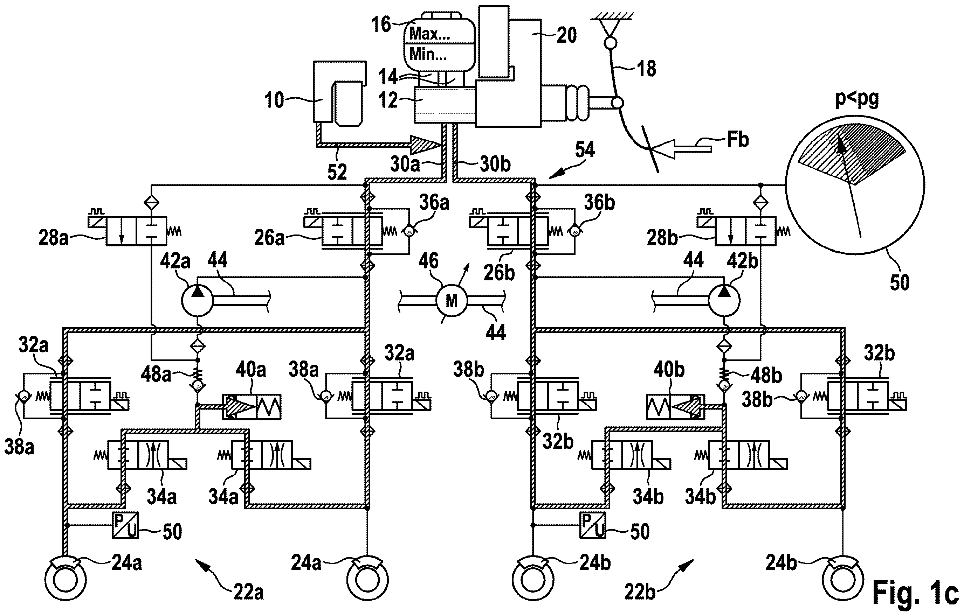

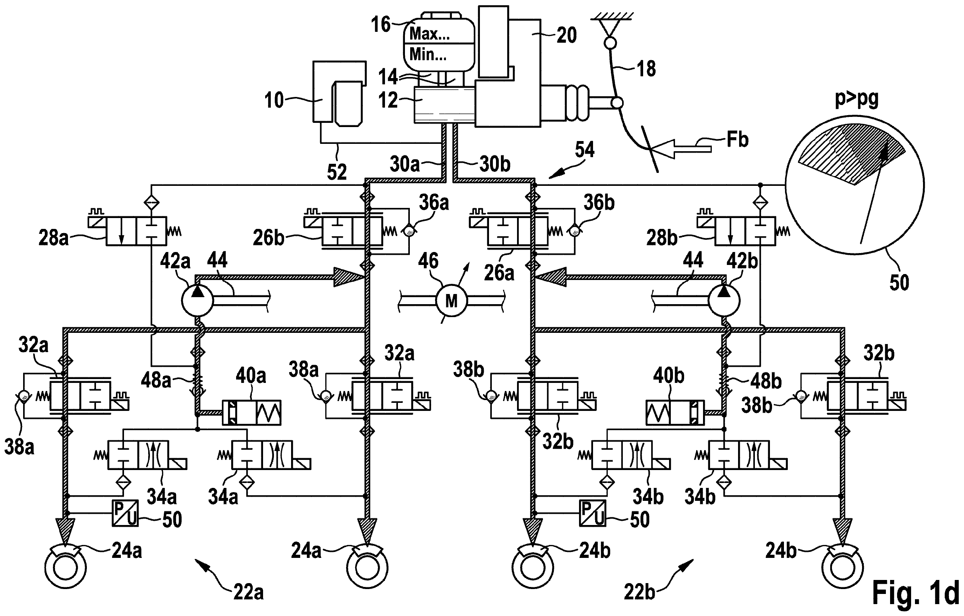

Fig. 1 a zeigt das Bremssystem in einer Betriebssituation in welcher der mittels eines Drucksensors 50 messbare Gegendruck p in einem Bremskreisabschnitt 54 eines zweiten Bremskreises 22b, welcher von dem Hauptbremszylinder 12, dem Umschaltventil 26b des zweiten Bremskreises 22b und dem Hochdruckschaltventil 28b des zweiten Bremskreises 22b begrenzt wird, unter einem Grenz-Gegendruck pg der Plungereinrichtung 10 liegt. (Aufgrund der Anordnung eines (nicht skizzierten) verstellbaren Zwischenkolbens, wie z.B. eines Schwimmkolbens, zwischen einer ersten Hauptbremszylinder-Druckkammer, an welche der erste Bremskreis 22a angebunden ist, und einer zweiten Hauptbremszylinder-Druckkammer, an welche der zweite Bremskreis 22b angeschlossen ist, ist auch der in der Zufuhrleitung 30a des ersten Bremskreises 22a und der Leitung 52 vorliegende Druck kleiner als der Grenz-Gegendruck pg.) Die Ist-Druckgröße übersteigt somit die Vergleichs-Druckgröße nicht. Somit kann mittels eines Betriebs des Motors der Plungereinrichtung 10 deren Plunger so verschoben werden, dass das mit Flüssigkeit befüllbare Speichervolumen der Plungereinrichtung 10 reduziert und ein Bremsflüssigkeit aus der Plungereinrichtung 10 zu den Radbremszangen 24a und 24b verschoben wird, um deren hydraulische Bremsmomente zu steigern.

Fig. 1b zeigt das Bremssystem in einer Betriebssituation, in welcher der in dem Bremskreisabschnitt 54 vorliegende Gegendruck p größer als der Grenz-Gegendruck pg der Plungereinrichtung 10 ist. (Aufgrund der (standardgemäßen) Ausstattung des Hauptbremszylinders 12 mit einem verstellbaren Zwischenkolben ist somit auch der Druck p in der Zufuhrleitung 30a des ersten Bremskreises und der Leitung 52 größer als der Grenz-Gegendruck pg.) Somit wirkt der zum Herausdrücken von Bremsflüssigkeit aus dem Speichervolumen der Plungereinrichtung 10 auszuführenden Verstellbewegung des Plungers eine Gegenkraft Fg entgegen, welche der Motor und/oder das Getriebe der Plungereinrichtung 10 kaum/nicht überwinden können. Anhand der Fig. 1 c ist jedoch erläutert, wie trotz dieser Betriebssituation mit einem Gegendruck p größer als dem Grenz-Gegendruck pg noch mittels der Plungereinrichtung 10 Bremsflüssigkeit in den mindestens einen Bremskreis 22a und 22 b des Bremssystems verschoben werden kann:
Sofern bei dem Vergleichen der Ist-Druckgröße mit der vorgegebenen Vergleichs-Druckgröße erkannt wird, dass die Ist-Druckgröße die Vergleichs-Druckgröße übersteigt, wird (vor dem Transferieren des Bremsflüssigkeitsvolumens aus der Plungereinrichtung 10 in den mindestens einen Bremskreis 22a und 22b) zumindest ein Vordruck in dem Bremssystem reduziert. Dies geschieht beispielsweise durch Steuern zumindest einer Ventileinrichtung des Bremssystems in einen zumindest teilgeöffneten Zustand zum Reduzieren zumindest des Vordrucks in dem Bremssystem. Beispielsweise kann, wie in Fig. 1 c dargestellt ist, zum Reduzieren zumindest des Vordrucks in dem Bremssystem das mindestens eine Radauslassventil 34a und 34b als die mindestens eine Ventileinrichtung in einen zumindest teilgeöffneten Zustand gesteuert werden. Somit ist über das mindestens eine Radauslassventil 34a und 34b Bremsflüssigkeit in die mindestens eine Speicherkammer 40a und 40b verschiebbar. Auf diese Weise ist der der Plungereinrichtung 10 entgegenwirkende Gegendruck p auf einen Wert unter dem Grenz-Gegendruck pg reduzierbar (siehe Fig. 1 c). Vor Allem kann auf diese Weise der in beiden Bremskreises 22a und 22b vorliegende Druck unter den Brems-Gegendruck pg gesenkt werden.

Sobald der Gegendruck p unter dem Grenz-Gegendruck pg liegt, kann durch Transferieren des Bremsflüssigkeitsvolumen aus der Plungereinrichtung 10 in den mindestens einen Bremskreis 22a und 22b des Bremssystems der Bremsdruck in dem mindestens einen Bremskreis 22a und 22b des Bremssystems gesteigert werden. Insbesondere kann bereits während des Ablassens von Bremsflüssigkeit über das mindestens eine zumindest teilgeöffnete Radauslassventil 34a und 34b in die mindestens eine Speicherkammer 40a und 40b mit dem Fördern des Bremsflüssigkeitsvolumens aus der Plungereinrichtung 10 in den mindestens einen Bremskreis 22a und 22b begonnen werden. Ab dem Erreichen eines Gegendrucks p kleiner oder gleich dem Grenz-Gegendruck pg durch Ablassen der Bremsflüssigkeit in die mindestens eine Speicherkammer 40a und 40b und der dadurch verursachte Gegendruck-Senkung kann die Plungereinrichtung 10 das Bremsflüssigkeitsvolumen verlässlich in den mindestens einen Bremskreis 22a und 22b fördern.

Der Druck in dem Bremssystem wird somit bei dieser Ausführungsform für eine kurze Zeit auf einen Wert unter dem Grenz-Gegendruck pg abgesenkt. Dies kann kurzzeitig eine Verlängerung eines Betätigungswegs des Bremsbetätigungselements 18 bewirken. Da die Absenkung des Drucks im Bremssystem auf einen Wert unter dem Grenz-Gegendruck pg jedoch nach kurzer Zeit korrigierbar ist, bemerkt der Fahrer die Bremsbetätigungsweg-Verlängerung in der Regel nicht.

Es wird darauf hingewiesen, dass zum Ausführen des in der Fig. 1c schematisch wiedergegebenen Verfahrensschritts eine herkömmlicher Weise bereits in einem ESP-Bremssystem vorhandene Komponente verwendbar ist. Somit setzt die Ausführbarkeit des Verfahrens keine zusätzliche Ausstattung des Bremssystems mit einer weiteren Komponente voraus. Außerdem entfällt bei der Ausführung des in Fig. 1c wiedergegebenen Verfahrensschritts die Notwendigkeit, die Plungereinrichtung 10 für ein Entgegenwirken eines Gegendrucks p bis zu einem Vergleichsweise großen Grenz-Gegendruck pg auszulegen. Das Bremssystem kann somit mit einer kostengünstigen, wenig Bauraum benötigenden und/oder einen geringen Energieverbrauch habenden Plungereinrichtung 10 ausgestattet sein.

Optionalerweise kann nach dem Reduzieren zumindest des Vordrucks in dem Bremssystem um eine Druckdifferenz und während und/oder nach dem Transferieren des Bremsflüssigkeitsvolumens aus der Plungereinrichtung 10 in den mindestens einen Bremskreis 22a und 22b zumindest der Vordruck in dem Bremssystem um die (zuvor reduzierte) Druckdifferenz gesteigert werden. Man kann dies auch als eine Korrektur des Druck- und Volumenhaushalts des Bremssystems bezeichnen.

Beispielsweise können während und/oder nach dem Fördern des Bremsflüssigkeitsvolumens in den mindestens einen Bremskreis 22a und 22b mittels der Plungereinrichtung 10 die Radauslassventile 34a und 34b des Bremssystems aus dem zumindest teilgeöffneten Zustand in einen geschlossenen Zustand gesteuert werden. Anschließend kann die zuvor in die mindestens eine Speicherkammer 40a und 40b verschobene Bremsflüssigkeit mittels der mindestens einen Pumpe 42a und 42b wieder zurückgefördert werden. Das Ausgleichen des Druck- und Volumenhaushalts ist somit auf einfache Weise und mittels einer herkömmlicher Weise bereits am Bremssystem vorhandenen Komponente ausführbar.

Mittels des in Fig. 1 d schematisch wiedergegebenen Verfahrensschritts kann der in dem Abschnitt 54 vorliegende Gegendruck p wieder auf einen Wert über den Grenz-Gegendruck pg gesteigert werden. Der Fahrer hat nach dem Ausführen des in den oberen Absätzen beschriebenen Verfahrens ein standardgemäßes Bremsbetätigungsgefühl.

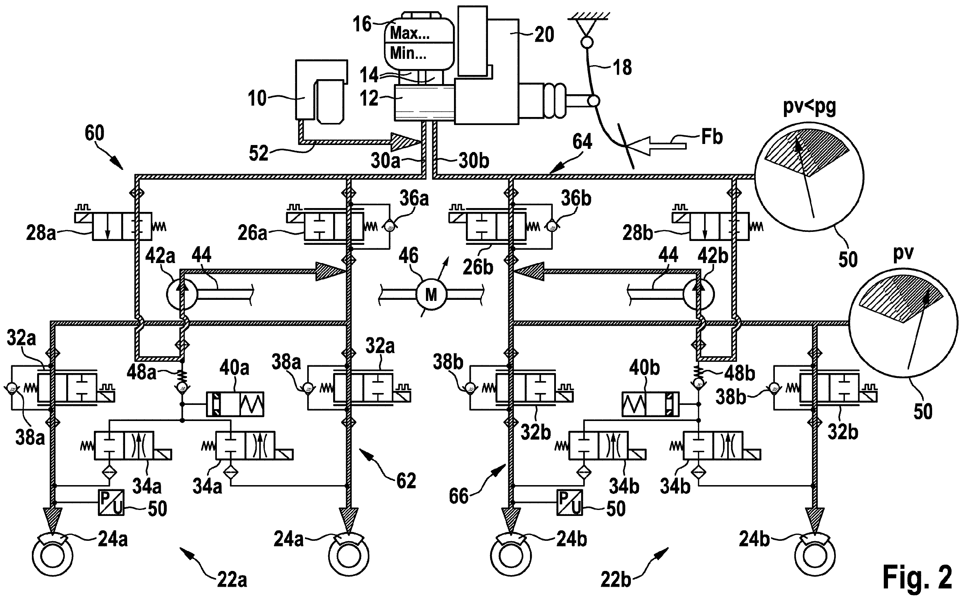

Fig. 2 zeigt eine schematische Darstellung eines mittels einer zweiten Ausführungsform des Verfahrens betriebenen Bremssystems.

Das in Fig. 2 schematisch wiedergegebene Bremssystem weist die oben schon beschriebenen Komponenten auf. Auf eine erneute Beschreibung des Bremssystems wird deshalb hier verzichtet.

Das wiedergegebene Verfahren unterscheidet sich von der vorausgehend beschriebenen Ausführungsform darin, dass (bei einem Erkennen einer Ist-Druckgröße über der Vergleichs-Druckgröße, bzw. bei der in Fig. 1 b wiedergegebenen Betriebssituation) zum Reduzieren zumindest des Vordrucks in dem Bremssystem mindestens ein Hochdruckschaltventil 28a und 28b als die mindestens eine Ventileinrichtung in einen zumindest teilgeöffneten Zustand gesteuert wird. Gleichzeitig wird mittels der Pumpe 42a des ersten Bremskreises 22a Bremsflüssigkeit aus einem ersten Bremskreisabschnitt 60, welcher von dem Hauptbremszylinder 12, einem Umschaltventil 26a des ersten Bremskreises 22a und der Pumpe 42a des ersten Bremskreises 22a begrenzt wird, in einen ersten Rest-Bremskreisabschnitt 62 des ersten Bremskreises 22a gepumpt. Auf diese Weise ist ein in dem ersten Bremskreisabschnitt 60 vorliegender erster Vordruck reduzierbar, wobei gleichzeitig der in dem ersten Rest-Bremskreisabschnitt vorherrschende Druck steigerbar ist. Zusätzlich kann mittels der Pumpe 42b des zweiten Bremskreises 22b Bremsflüssigkeit aus einem zweiten Bremskreisabschnitt 64, welcher von dem Hauptbremszylinder 12, einem Umschaltventil 26b des zweiten Bremskreises 22b und der Pumpe 42b des zweiten Bremskreises 22b begrenzt wird, in einen zweiten Rest-Bremskreisabschnitt 66 des zweiten Bremskreises 22b gepumpt werden. Somit ist ein in dem zweiten Bremskreisabschnitt 64 vorliegender zweiter Vordruck pv unter den Grenz-Gegendruck pg reduzierbar, wobei gleichzeitig ein in dem zweiten Rest-Bremskreisabschnitt 66 vorherrschende Druck pr steigerbar ist. Es wird darauf hingewiesen, dass trotz der Reduzierung des Vordrucks in dem mindestens einen Bremskreisabschnitt 60 und 64 der in den Radbremszangen 24a und 24b vorliegende Bremsdruck dem Fahrerbremswunsch entspricht/entsprechen kann.

Als Vordruck pv kann somit ein in dem ersten Bremskreisabschnitt 60 und/oder in dem zweiten Bremskreisabschnitt 64 vorliegender Druck bezeichnet werden. Ebenso kann unter dem mindestens einen Vordruck pv eines Bremssystems ein in mindestens einem Bremskreis 22a oder 22b zwischen dem Hauptbremszylinder 12, einem Umschaltventil 26a oder 26b und/oder einem Hochdruckschaltventil 28a oder 28b vorliegender Druck verstanden werden. Als Vordruck pv ist auch der in mindestens einer Zufuhrleitung 30a und 30b vorliegende Druck umschreibbar.

Ist der Vordruck zumindest in einem mit der Plungereinrichtung 10 hydraulisch verbundenen Bremskreisabschnitt 60 unter den Grenz-Gegendruck pg reduziert, so kann die Plungereinrichtung 10 Bremsflüssigkeit zumindest in den daran angebundenen Bremskreisabschnitt 60 fördern. Somit setzt die Ausführbarkeit des hier beschriebenen Verfahrens kein Reduzieren des in den gesamten Bremskreisen 22a und 22b vorliegenden Drucks unter den Grenz-Gegendruck pg voraus. Das vorteilhafte Verfahren ist somit mit einem vergleichsweise geringen Energieverbrauch ausführbar.

Auch bei dieser Ausführungsform des Verfahrens kann nach dem Verschieben des Bremsflüssigkeitsvolumens aus der Plungereinrichtung 10 in den mindestens einen Bremskreisabschnitt 60 das zuvor in den mindestens einen Restkreisabschnitt 62 und 66 gepumpte Bremsflüssigkeitsvolumen wieder zurückgefördert werden. Somit hat der Fahrer auch nach dem Ausführen der hier beschriebenen Ausführungsform ein standardgemäßes Bremsbetätigungsgefühl (Pedalgefühl).

Als Alternative oder als Ergänzung zu den oben beschriebenen Ausführungsformen kann zum Reduzieren zumindest des Vordrucks in dem Bremssystem auch die mittels der Bremskraftverstärkervorrichtung 20 auf den mindestens einen verstellbaren Kolben des Hauptbremszylinders 12 ausgeübte Bremsunterstützungskraft reduziert werden. Eine derartige Reduzierung der Bremsunterstützungskraft kann eine Druckreduzierung in dem Hauptbremszylinder 12 und zumindest in den an dem Hauptbremszylinder 12 angebundenen Zufuhrleitungen 30a und 30b bewirken. Somit kann auch nach der Reduzierung der Bremsunterstützungskraft mittels der Plungereinrichtung 10 das Bremsflüssigkeitsvolumen aus dem Speichervolumen der Plungereinrichtung 10 zumindest in mindestens eine Zufuhrleitung 30a verschoben werden.

In einer vorteilhaften Weiterbildung kann mittels eines Ansteuerns der Bremskraftverstärkervorrichtung 20 auch gewährleistet werden, dass der Fahrer trotz der kurzzeitigen Absenkung zumindest des Vordrucks pr/Gegendrucks p unter den Grenz-Gegendruck pg ein standardgemäßes Bremsbetätigungsgefühl hat. Dazu kann eine durch das Reduzieren zumindest des Vordrucks pr/Gegendrucks p bewirkte Reduzierung einer Rückstellkraft, welche auf den mindestens einen verstellbaren Kolben des Hauptbremszylinders durch den darin vorliegenden Druck ausgeübt wird, durch eine Reduzierung der Bremsunterstützungskraft der Bremskraftverstärkervorrichtung 20 (zumindest teilweise) kompensiert werden. Unter der Rückstellkraft kann insbesondere eine der Einbremsbewegung des mindestens einen verstellbaren Kolbens des Hauptbremszylinders entgegenwirkende Kraft, entgegen welcher der mindestens eine verstellbare Kolben mittels der Fahrerbremskraft und/oder der Bremsunterstützungskraft verstellbar ist, verstanden werden.

Zum Ausführen der vorteilhaften Weiterbildung kann unter Berücksichtigung einer Öffnungszeit der mindestens einen in den teilgeöffneten Zustand gesteuerten Ventileinrichtung, einer Pumpleistung der mindestens einen zum Reduzieren zumindest des Vordrucks verwendeten Pumpe und/oder der Reduzierung zumindest des Vordrucks eine Soll-Bremsunterstützungskraft-Reduzierung festgelegt werden. Anschließend kann die Bremskraftverstärkervorrichtung 20 so angesteuert werden, dass die auf den mindestens einen verstellbaren Kolben des Hauptbremszylinders ausgeübte Bremsunterstützungskraft entsprechend der festgelegten Soll-Bremsunterstützungskraft-Reduzierung reduziert wird. Dies kann so ausgeführt werden, dass der mindestens eine verstellbare Kolben des Hauptbremszylinders 12 trotz der Absenkung zumindest des Vordrucks in seiner vor der Absenkung eingenommenen Stellung verharrt.

Durch das in den oberen Absätzen beschriebene Verfahren kann somit die Einsetzungsmöglichkeit einer Plungereinrichtung 10 zum Reduzieren einer zeitlichen Abnahme eines nicht-hydraulischen Zusatz-Bremsmoments, wie beispielsweise eines Generator-Bremsmoments, erweitert werden. Ebenso kann das beschriebene Verfahren genutzt werden, um trotz eines vergleichweise hohen Drucks in einem Bremssystem die Plungereinrichtung zum Steigern des in den Radbremszangen 24a und 24b vorliegenden Bremsdrucks einzusetzen.

Außerdem ist mittels des hier beschriebenen Verfahrens ein vorteilhaftes Bremsbetätigungsgefühl (Pedalgefühl) für den Fahrer trotz der kurzzeitigen Absenkung zumindest des Vordrucks realisierbar. Somit entfällt die herkömmlicher Weise aufgrund einer Nichteinsetzbarkeit einer Plungerkomponente zum Rückfördern eines Bremsflüssigkeitsvolumens häufig auftretende Pedalwegverlängerung.

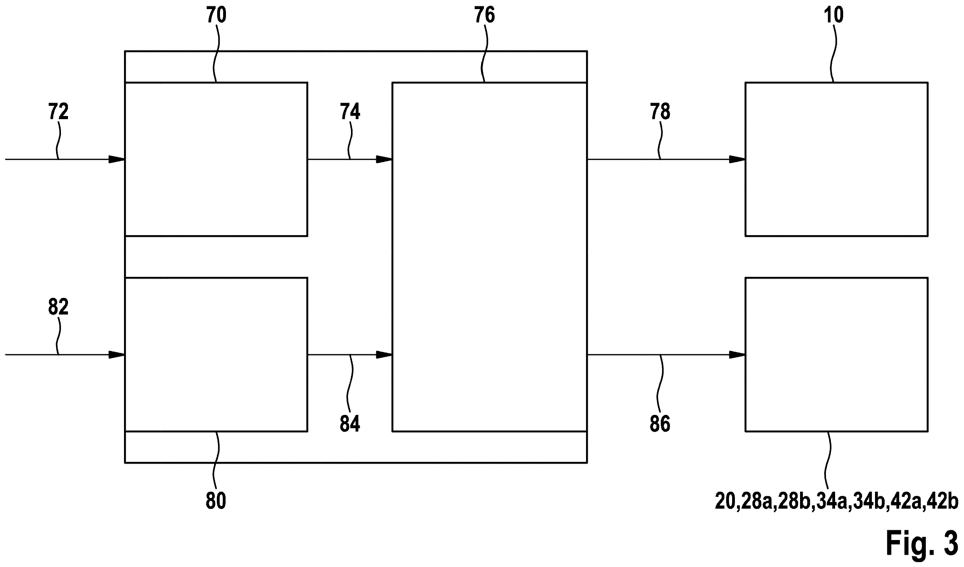

Fig. 3 zeigt eine schematische Darstellung einer Ausführungsform der Steuervorrichtung.

Die in Fig. 3 schematisch wiedergegebene Steuervorrichtung ist für ein Zusammenwirken mit einem mit einer Plungereinrichtung 10 ausgestatten Bremssystem ausgelegt. Beispielsweise kann die Steuervorrichtung in dem oben beschriebenen Bremssystem eingesetzt werden. Die Einsetzbarkeit der Steuervorrichtung ist jedoch nicht auf einen bestimmten Typ eines Bremssystems limitiert. (Der besseren Übersichtlichkeit wegen wird auf die Darstellung des Bremssystems in Fig. 3 verzichtet.)

Die Steuervorrichtung weist eine erste Empfangseinrichtung 70 auf, mittels welcher zumindest ein Soll-Drucksteigerungs-Informations-Signal 72 bezüglich einer mittels der Plungereinrichtung 10 auszuführenden Drucksteigerung in mindestens einem Bremskreis des Bremssystems empfangbar ist. Insbesondere kann mittels der ersten Empfangseinrichtung 70 auch ein Soll-Drucksteigerungs-Informations-Signal 72 bezüglich einer zeitlichen Abnahme eines nicht-hydraulischen Zusatz-Bremsmoments, wie beispielsweise eines Generator-Bremsmoments, empfangbar sein. Die erste Empfangseinrichtung 70 ist außerdem dazu ausgelegt, eine dem Soll-Drucksteigerungs-Informations-Signal 72 entsprechende Soll-Drucksteigerungs-Information 74 an eine Steuereinrichtung 76 der Steuervorrichtung auszugeben.

Mittels der Steuereinrichtung 76 ist unter Berücksichtigung der (empfangenen) Soll-Drucksteigerungs-Information 74 ein Plungersteuersignal 78 an die Plungereinrichtung 10 ausgebbar. Insbesondere kann die Plungereinrichtung 10 mittels des Plungersteuersignals 78 so ansteuerbar sein, dass ein dem Soll-Drucksteigerungs-Informations-Signal 72/der Soll-Drucksteigerungs-Information 74 entsprechendes Bremsflüssigkeitsvolumen mittels der von dem Plungersteuersignal 78 angesteuerten Plungereinrichtung 10 in den mindestens einen Bremskreis des Bremssystems transferierbar ist.

Außerdem hat die Steuervorrichtung eine zweite Empfangseinrichtung 80, mittels welcher zumindest ein Ist-Druckgröße-Signal 82 bezüglich eines zumindest in einem Teilabschnitt des Bremssystems vorliegenden Ist-Drucks empfangbar ist. Eine dem Ist-Druckgröße-Signal 82 entsprechende Ist-Druckgröße 84 ist mittels der zweiten Empfangseinrichtung 80 an die Steuereinrichtung 76 ausgebbar. Beispiele für das Ist-Druckgröße-Signal 82/die Ist-Druckgröße 84 sind oben schon beschrieben.

Die Steuereinrichtung 76 ist vor einer Ausgabe des Plungersteuersignals 78 zusätzlich dazu ausgelegt, die Ist-Druckgröße 84 mit einer vorgegebenen (nicht dargestellten) Vergleichs-Druckgröße zu vergleichen. Sofern die Ist-Druckgröße 84 die Vergleichs-Druckgröße übersteigt, ist die Steuereinrichtung 76 dazu ausgelegt, unter Berücksichtigung einer Abweichung der Ist-Druckgröße 84 von der Vergleichs-Druckgröße mindestens ein Druckreduzierungs-Steuersignal 86 an mindestens eine Komponente 20, 26a, 26b, 28a, 28b, 34a, 34b, 42a und/oder 42b des Bremssystems auszugeben. Auf diese Weise ist gewährleistbar, dass mittels der mindestens einen von dem mindestens einen Druckreduzierungs-Steuersignal 86 angesteuerten Komponente 20, 26a, 26b, 28a, 28b, 34a, 34b, 42a und/oder 42b des Bremssystems zumindest ein Vordruck in dem Bremssystem reduzierbar ist.

Beispielsweise kann die Steuereinrichtung 76 vor der Ausgabe des Plungersteuersignals 78 dazu ausgelegt sein, mindestens ein Ventilsteuersignal als das mindestens eine Druckreduzierungs-Steuersignal 86 an mindestens eine Ventileinrichtung 26a, 26b, 28a, 28b, 34a und/oder 34b des Bremssystems auszugeben, wobei die mindestens eine Ventileinrichtung 26a, 26b, 28a, 28b, 34a und/oder 34b mittels des mindestens einen Ventilsteuersignals in einen zumindest teilgeöffneten Zustand steuerbar ist. Die ansteuerbare Ventileinrichtung 26a, 26b, 28a, 28b, 34a und/oder 34b kann beispielsweise mindestens ein Radauslassventil 34a und 34b. Als Alternative oder als Ergänzung dazu kann die mindestens eine ansteuerbare Ventileinrichtung 26a, 26b, 28a, 28b, 34a und/oder 34b auch ein Umschaltventil 26a und 26b und/oder ein Hochdruckschaltventil 28a und 28b sein. Auch mindestens eine Pumpe 42a und 42b kann mittels eines Pumpsteuersignals als dem mindestens einen Druckreduzierungs-Steuersignal 86 ansteuerbar sein.

Als Alternative oder als Ergänzung dazu kann die Steuereinrichtung 76 vor der Ausgabe des Plungersteuersignals 78 auch dazu ausgelegt sein, ein Bremskraftverstärker-Steuersignal als das mindestens eine Druckreduzierungs-Steuersignal 86 an eine Bremskraftverstärkervorrichtung 20 des Bremssystems auszugeben. Vorzugsweise ist die Bremskraftverstärkervorrichtung 20 mittels des Bremskraftverstärker-Steuersignals so ansteuerbar, dass eine mittels der Bremskraftverstärkervorrichtung 20 des Bremssystems auf mindestens einen verstellbaren Kolben eines Hauptbremszylinders des Bremssystems ausgeübte Bremsunterstützungskraft reduzierbar ist.

In einer vorteilhaften Weiterbildung ist die Steuereinrichtung 76 zusätzlich dazu ausgelegt, ein Gegendruck-Anpassungssignal an die Bremskraftverstärkervorrichtung 20 des Bremssystems auszugeben, wobei die Bremskraftverstärkervorrichtung 20 mittels des Gegendruck-Anpassungssignals so ansteuerbar ist, dass eine durch das Reduzieren zumindest des Vordrucks bewirkte Reduzierung einer Rückstellkraft, welcher auf den mindestens einen verstellbaren Kolben des Hauptbremszylinders ausgeübt wird, durch eine Reduzierung der Bremsunterstützungskraft der Bremskraftverstärkervorrichtung 20 des Bremssystems (zumindest teilweise) kompensierbar ist.

Ergänzend kann die Steuereinrichtung 76 nach der Ausgabe des Plungersteuersignals 78 zusätzlich dazu ausgelegt sein, unter Berücksichtigung der Abweichung der Ist-Druckgröße 84 von der Vergleichs-Druckgröße und/oder des mindestens einen Druckreduzierungs-Steuersignals 86 mindestens ein (nicht skizziertes) Drucksteigerungs-Steuersignal an mindestens eine Komponente des Bremssystems auszugeben, so dass mittels der mindestens einen von dem mindestens einen Drucksteigerungs-Steuersignal angesteuerten Komponente des Bremssystems zumindest der Vordruck in dem Bremssystem um eine zuvor reduzierte Druckdifferenz steigerbar ist.

## Patentansprüche

1. Verfahren zum Betreiben eines mit einer Plungereinrichtung (10) ausgestatteten Bremssystems eines Fahrzeugs mit dem Schritt:
Steigern eines Bremsdrucks in mindestens einem Bremskreis (22a, 22b) des Bremssystems durch Transferieren eines Bremsflüssigkeitsvolumens aus der Plungereinrichtung (10) in den mindestens einen Bremskreis (22a, 22b) des Bremssystems;
**gekennzeichnet durch** die Schritte:
Vergleichen einer Ist-Druckgröße (p, pv) bezüglich eines vor dem Steigern des Bremsdrucks zumindest in einem Teilabschnitt (54, 60, 64) des Bremskreises vorliegenden Ist-Drucks mit einer vorgegebenen Vergleichs-Druckgröße (pg); und,
sofern die Ist-Druckgröße (p, pv) die Vergleichs-Druckgröße (pg) übersteigt, Reduzieren zumindest eines Vordrucks (p, pv) in dem Bremskreis vor dem Transferieren des Bremsflüssigkeitsvolumens aus der Plungereinrichtung (10) in den mindestens einen Bremskreis (22a, 22b).

2. Verfahren nach Anspruch 1, wobei zum Reduzieren zumindest des Vordrucks (p, pv) in dem Bremskreis zumindest eine Ventileinrichtung (26a, 26b, 28a, 28b, 34a, 34b) des Bremssystems in einen zumindest teilgeöffneten Zustand gesteuert wird.

3. Verfahren nach Anspruch 2, wobei zum Reduzieren zumindest des Vordrucks (p, pv) in dem Bremskreis mindestens ein Radauslassventil (34a, 34b) als die mindestens eine Ventileinrichtung (34a, 34b) in den zumindest teilgeöffneten Zustand gesteuert wird.

4. Verfahren nach Anspruch 2 oder 3, wobei zum Reduzieren zumindest des Vordrucks (p, pv) in dem Bremskreis mindestens ein Hochdruckschaltventil (28a, 28b) und/oder mindestens ein Umschaltventil (26a, 26b) als die mindestens eine Ventileinrichtung (26a, 26b, 28a, 28b) in den zumindest teilgeöffneten Zustand gesteuert wird.

5. Verfahren nach einem der vorhergehenden Ansprüche, wobei zum Reduzieren zumindest des Vordrucks (p, pv) in dem Bremskreis eine mittels einer Bremskraftverstärkervorrichtung (20) des Bremssystems auf mindestens einen verstellbaren Kolben eines Hauptbremszylinders (12) des Bremssystems ausgeübte Bremsunterstützungskraft reduziert wird.

6. Verfahren nach einem der Ansprüche 2 bis 4, wobei eine durch das Reduzieren zumindest des Vordrucks (p, pv) bewirkte Reduzierung einer Rückstellkraft, welche auf den mindestens einen verstellbaren Kolben des Hauptbremszylinders (12) ausgeübt wird, durch eine Reduzierung der Bremsunterstützungskraft der Bremskraftverstärkervorrichtung (20) des Bremssystems zumindest teilweise kompensiert wird.

7. Verfahren nach einem der vorhergehenden Ansprüche, wobei nach dem Reduzieren zumindest des Vordrucks (p, pv) in dem Bremskreis um eine Druckdifferenz und nach dem Transferieren des Bremsflüssigkeitsvolumens aus der Plungereinrichtung (10) in den mindestens einen Bremskreis (22a, 22b) zumindest der Vordruck in dem Bremskreis um die Druckdifferenz gesteigert wird.

8. Steuervorrichtung für ein mit einer Plungereinrichtung (10) ausgestattetes Bremssystem eines Fahrzeugs mit:
einer ersten Empfangseinrichtung (70), mittels welcher zumindest eine Soll-Drucksteigerungs-Information (72, 74) bezüglich einer mittels der Plungereinrichtung (10) auszuführenden Drucksteigerung in mindestens einem Bremskreis (22a, 22b) des Bremssystems empfangbar ist; und
einer Steuereinrichtung (76), mittels welcher unter Berücksichtigung der empfangenen Soll-Drucksteigerungs-Information (72, 74) ein Plungersteuersignal (78) an die Plungereinrichtung (10) ausgebbar ist, so dass ein der Soll-Drucksteigerungs-Information (72, 74) entsprechendes Bremsflüssigkeitsvolumen mittels der von dem Plungersteuersignal (78) angesteuerten Plungereinrichtung (10) in den mindestens einen Bremskreis (22a, 22b) des Bremssystems transferierbar ist;
**gekennzeichnet durch**
eine zweite Empfangseinrichtung (80), mittels welcher zumindest eine Ist-Druckgröße (82, 84) bezüglich eines zumindest in einem Teilabschnitt (54, 60, 64) des Bremskreises vorliegenden Ist-Drucks empfangbar ist; wobei
die Steuereinrichtung (76) vor einer Ausgabe des Plungersteuersignals (78) zusätzlich dazu ausgelegt ist, die Ist-Druckgröße (82, 84) mit einer vorgegebenen Vergleichs-Druckgröße zu vergleichen, und, sofern die Ist-Druckgröße (82, 84) die Vergleichs-Druckgröße übersteigt, unter Berücksichtigung einer Abweichung der Ist-Druckgröße (82, 84) von der Vergleichs-Druckgröße mindestens ein Druckreduzierungs-Steuersignal (86) an mindestens eine Komponente (20, 28a, 28b, 34a, 34b, 42a, 42b) des Bremssystems auszugeben, so dass mittels der mindestens einen von dem mindestens einen Druckreduzierungs-Steuersignal (86) angesteuerten Komponente (20, 28a, 28b, 34a, 34b, 42a, 42b) des Bremssystems zumindest ein Vordruck (p, pv) in dem Bremskreis reduzierbar ist.

9. Steuervorrichtung nach Anspruch 8, wobei die Steuereinrichtung vor der Ausgabe des Plungersteuersignals (78) dazu ausgelegt ist, mindestens ein Ventilsteuersignal als das mindestens eine Druckreduzierungs-Steuersignal (86) an mindestens eine Ventileinrichtung (26a, 26b, 28a, 28b, 34a, 34b) des Bremssystems auszugeben, und wobei die mindestens eine Ventileinrichtung (26a, 26b, 28a, 28b, 34a, 34b) mittels des mindestens einen Ventilsteuersignals in einen zumindest teilgeöffneten Zustand steuerbar ist.

10. Steuervorrichtung nach Anspruch 9, wobei die Steuereinrichtung (76) vor der Ausgabe des Plungersteuersignals (78) dazu ausgelegt ist, das mindestens eine Ventilsteuersignal an mindestens ein Radauslassventil (34a, 34b), an mindestens ein Hochdruckschaltventil (28a, 28b) und/oder an mindestens ein Umschaltventil (26a, 26b) auszugeben.

11. Steuervorrichtung nach einem der Ansprüche 8 bis 10, wobei die Steuereinrichtung (76) vor der Ausgabe des Plungersteuersignals (78) dazu ausgelegt ist, ein Bremskraftverstärker-Steuersignal als das mindestens eine Druckreduzierungs-Steuersignal (86) an eine Bremskraftverstärkervorrichtung (20) des Bremssystems auszugeben, und wobei die Bremskraftverstärkervorrichtung (20) mittels des Bremskraftverstärker-Steuersignals so ansteuerbar ist, dass eine mittels der Bremskraftverstärkervorrichtung (20) des Bremssystems auf mindestens einen verstellbaren Kolben eines Hauptbremszylinders (12) des Bremssystems ausgeübte Bremsunterstützungskraft reduzierbar ist.

12. Steuervorrichtung nach einem der Ansprüche 9 oder 10, wobei die Steuereinrichtung (76) zusätzlich dazu ausgelegt ist, ein Gegendruck-Anpassungssignal an die Bremskraftverstärkervorrichtung (20) des Bremssystems auszugeben, und wobei die Bremskraftverstärkervorrichtung (20) mittels des Gegendruck-Anpassungssignals so ansteuerbar ist, dass eine durch das Reduzieren zumindest des Vordrucks bewirkte Reduzierung einer Rückstellkraft, welche auf den mindestens einen verstellbaren Kolben des Hauptbremszylinders (12) ausgeübt wird, durch eine Reduzierung der Bremsunterstützungskraft der Bremskraftverstärkervorrichtung (20) des Bremssystems zumindest teilweise kompensierbar ist.

13. Steuervorrichtung nach einem der Ansprüche 8 bis 12, wobei die Steuereinrichtung (76) nach der Ausgabe des Plungersteuersignals (78) zusätzlich dazu ausgelegt ist, unter Berücksichtigung der Abweichung der Ist-Druckgröße (82, 84) von der Vergleichs-Druckgröße und/oder des mindestens einen Druckreduzierungs-Steuersignals (86) mindestens ein Drucksteigerungs-Steuersignal an mindestens eine Komponente des Bremssystems auszugeben, so dass mittels der mindestens einen von dem mindestens einen Drucksteigerungs-Steuersignal angesteuerten Komponente des Bremssystems zumindest der Vordruck in dem Bremskreis um eine Druckdifferenz steigerbar ist.

14. Bremssystem für ein Fahrzeug mit:
einer Steuervorrichtung nach einem der Ansprüche 8 bis 13; und
einer Plungereinrichtung (10).

## Claims

1. Method for operating a brake system of a vehicle, which is equipped with a plunger device (10), comprising the step:
increasing a brake pressure in at least one brake circuit (22a, 22b) of the brake system by transferring a brake fluid volume from the plunger device (10) into the at least one brake circuit (22a, 22b) of the brake system;
**characterized by** the steps:
comparing an actual pressure variable (p, pv) relating to an actual pressure present at least in a subsection (54, 60, 64) of the brake circuit, before the increasing of the brake pressure, with a predefined comparison pressure variable (pg); and
if the actual pressure variable (p, pv) exceeds the comparison pressure variable (pg), reducing at least one admission pressure (p, pv) in the brake circuit before the transfer of the brake fluid volume from the plunger device (10) into the at least one brake circuit (22a, 22b).

2. Method according to Claim 1, wherein in order to reduce at least the admission pressure (p, pv) in the brake circuit, at least one valve device (26a, 26b, 28a, 28b, 34a, 34b) of the brake system is placed in an at least partially opened state.

3. Method according to Claim 2, wherein in order to reduce at least the admission pressure (p, pv) in the brake circuit, at least one wheel outlet valve (34a, 34b), as the at least one valve device (34a, 34b), is placed in the at least partially opened state.

4. Method according to Claim 2 or 3, wherein in order to reduce at least the admission pressure (p, pv) in the brake circuit, at least one high-pressure switching valve (28a, 28b) and/or at least one switchover valve (26a, 26b), as the at least one valve device (26a, 26b, 28a, 28b), is placed in the at least partially opened state.

5. Method according to one of the preceding claims, wherein in order to reduce at least the admission pressure (p, pv) in the brake circuit, a braking assistance force which is applied to at least one adjustable piston of a master brake cylinder (12) of the brake system by means of a braking force-boosting device (20) of the brake system is reduced.

6. Method according to one of Claims 2 to 4, wherein a reduction, brought about by the reduction of at least the admission pressure (p, pv), in a resetting force which is applied to the at least one adjustable piston of the master brake cylinder (12) is at least partially compensated by reducing the braking assistance force of the braking force-boosting device (20) of the brake system.

7. Method according to one of the preceding claims, wherein after the reduction of at least the admission pressure (p, pv) in the brake circuit by a pressure difference and after the transfer of the brake fluid volume from the plunger device (10) into the at least one brake circuit (22a, 22b), at least the admission pressure in the brake circuit is increased by the pressure difference.

8. Control apparatus for a brake system of a vehicle, which is equipped with a plunger device (10), comprising:
a first receiver device (70) by means of which at least one setpoint pressure-increase information item (72, 74) relating to a pressure increase which is to be carried out by means of the plunger device (10) in at least one brake circuit (22a, 22b) of the brake system can be received; and
a control device (76) by means of which a plunger control signal (78) can be output to the plunger device (10) taking into account the received setpoint pressure-increase information item (72, 74), with the result that a brake fluid volume which corresponds to the setpoint pressure-increase information item (72, 74) can be transferred into the at least one brake circuit (22a, 22b) of the brake system by means of the plunger device (10) which is actuated by the plunger control signal (78);
**characterized by**
a second receiver device (80) by means of which at least one actual pressure variable (82, 84) relating to an actual pressure present at least in a subsection (54, 60, 64) of the brake circuit can be received; wherein
the control device (76) is additionally configured to compare, before outputting of the plunger control signal (78), the actual pressure variable (82, 84) with a predefined comparison pressure variable, and, if the actual pressure variable (82, 84) exceeds the comparison pressure variable, to output at least one pressure-reduction control signal (86) to at least one component (20, 28a, 28b, 34a, 34b, 42a, 42b) of the brake system, taking into account a deviation of the actual pressure variable (82, 84) from the comparison pressure variable, with the result that at least one admission pressure (p, pv) in the brake circuit can be reduced by means of the at least one component (20, 28a, 28b, 34a, 34b, 42a, 42b), actuated by the at least one pressure-reduction control signal (86), of the brake system.

9. Control apparatus according to Claim 8, wherein the control device is configured to output, before the outputting of the plunger control signal (78), at least one valve control signal as the at least one pressure-reduction control signal (86) to at least one valve device (26a, 26b, 28a, 28b, 34a, 34b) of the brake system, and wherein the at least one valve device (26a, 26b, 28a, 28b, 34a, 34b) can be placed in an at least partially opened state by means of the at least one valve control signal.

10. Control apparatus according to Claim 9, wherein the control device (76) is configured to output, before the outputting of the plunger control signal (78), the at least one valve control signal to at least one wheel outlet valve (34a, 34b), to at least one high-pressure switching valve (28a, 28b) and/or to at least one switchover valve (26a, 26b) .

11. Control apparatus according to one of Claims 8 to 10, wherein the control device (76) is configured to output, before the outputting of the plunger control signal (78), a braking force-boosting control signal, as the at least one pressure-reduction control signal (86), to a braking force-boosting device (20) of the brake system, and wherein the braking force-boosting device (20) can be actuated by means of the braking force-boosting control signal in such a way that a braking assistance force which is applied to at least one adjustable piston of a master brake cylinder (12) of the brake system by means of the braking force-boosting device (20) of the brake system can be reduced.

12. Control apparatus according to one of claims 9 or 10, wherein the control device (76) is additionally configured to output a counterpressure-adaptation signal to the braking force-boosting device (20) of the brake system, and wherein the braking force-boosting device (20) can be actuated by means of the counterpressure-adaptation signal in such a way that a reduction, brought about by the reduction of at least the admission pressure, in a resetting force which is applied to the at least one adjustable piston of the master brake cylinder (12) can be at least partially compensated by reducing the braking assistance force of the braking force-boosting device (20) of the brake system.

13. Control apparatus according to one of Claims 8 to 12, wherein the control device (76) is additionally configured to output, after the outputting of the plunger control signal (78), at least one pressure-increase control signal to at least one component of the brake system, taking into account the deviation of the actual pressure variable (82, 84) from the comparison pressure variable and/or the at least one pressure-reduction control signal (86), with the result that at least the admission pressure in the brake circuit can be increased by a pressure difference by means of the at least one component, actuated by the at least one pressure-increase control signal, of the brake system.

14. Brake system for a vehicle having a plunger device (10),
**characterized by**
a control apparatus according to one of Claims 8 to 13.

## Revendications

1. Procédé de fonctionnement d'un système de frein de véhicule équipé d'un dispositif à piston plongeur (10) avec l'étape :
augmentation d'une pression de frein dans au moins un circuit de frein (22a, 22b) du système de frein par transfert d'un volume de liquide de frein hors du dispositif à piston plongeur (10) dans l'au moins un circuit de frein (22a, 22b) du système de frein ;
**caractérisé par** les étapes de :
comparaison d'un ordre de grandeur de pression réelle (p, pv) relatif à une pression réelle présente avant l'augmentation de la pression de frein au moins dans une section partielle (54, 60, 64) du circuit de frein avec un ordre de grandeur de pression de comparaison (pg) prédéfini ; et
dans la mesure où l'ordre de grandeur de pression réelle (p, pv) dépasse l'ordre de grandeur de pression de comparaison (pg), réduction d'au moins une pré-pression (p, pv) dans le circuit de frein avant le transfert du volume de liquide de frein hors du dispositif à piston plongeur (10) dans l'au moins un circuit de frein (22a, 22b).

2. Procédé selon la revendication 1, au moins un dispositif de soupape (26a, 26b, 28a, 28b, 34a, 34b) du système de frein étant commandé dans un état au moins en partie ouvert pour réduire au moins la pré-pression (p, pv) dans le circuit de frein.

3. Procédé selon la revendication 2, au moins une soupape de sortie à volant (34a, 34b) prenant la forme de l'au moins un dispositif de soupape (34a, 34b) étant commandée dans l'état au moins en partie ouvert pour réduire au moins la pré-pression (p, pv) dans le circuit de frein.

4. Procédé selon la revendication 2 ou 3, au moins une soupape de commutation de haute pression (28a, 28b) et/ou au moins une soupape de commutation (26a, 26b) prenant la forme de l'au moins un dispositif de soupape (26a, 26b, 28a, 28b) étant commandée dans l'état au moins en partie ouvert pour réduire au moins la pré-pression (p, pv) dans le circuit de frein.

5. Procédé selon l'une quelconque des revendications précédentes, une force de soutien au freinage exercée sur au moins un piston mobile d'un maître-cylindre de frein (12) du système de frein étant réduite à l'aide d'un dispositif amplificateur de force de freinage (20) du système de frein pour réduire au moins la pré-pression (p, pv) dans le circuit de frein.

6. Procédé selon l'une quelconque des revendications 2 à 4, une réduction d'une force de rappel, provoquée par la réduction d'au moins la pré-pression (p, pv), s'exerçant sur au moins un piston mobile du maître-cylindre de frein (12), étant au moins en partie compensée par une réduction de la force de soutien au freinage du dispositif amplificateur de force de freinage (20) du système de frein.

7. Procédé selon l'une quelconque des revendications précédentes, au moins la pré-pression étant accrue de la différence de pression dans le circuit de frein après la réduction d'au moins la pré-pression (p, pv) dans le circuit de frein d'une différence de pression et après le transfert du volume de liquide de frein hors du dispositif à piston plongeur (10) dans l'au moins un circuit de frein (22a, 22b).

8. Dispositif de commande pour un système de frein de véhicule équipé d'un dispositif à piston plongeur (10), avec :
un premier dispositif de réception (70) à l'aide duquel au moins une information d'augmentation de pression théorique (72, 74) relative à une augmentation de pression à réaliser à l'aide du dispositif à piston plongeur (10) peut être reçue dans au moins un circuit de frein (22a, 22b) du système de frein ; et
un dispositif de commande (76) à l'aide duquel en tenant compte de l'information d'augmentation de pression théorique (72, 74) reçue, un signal de commande de piston plongeur (78) est envoyé au dispositif à piston plongeur (10), de sorte qu'un volume de liquide de frein correspondant à l'information d'augmentation de pression théorique (72, 74) peut être transféré, à l'aide du dispositif à piston plongeur (10) commandé par le signal de commande de piston plongeur (78), dans l'au moins un circuit de frein (22a, 22b) du système de frein ;
**caractérisé par** :
un deuxième dispositif de réception (80) à l'aide duquel au moins un ordre de grandeur de pression réelle (82, 84) relatif à au moins une pression réelle présente dans une section partielle (54, 60, 64) du circuit de frein peut être reçue ;
le dispositif de commande (76) étant en outre conçu pour comparer l'ordre de grandeur de pression réelle (82, 84) à un ordre de grandeur de pression de comparaison prédéfini avant l'envoi du signal de commande de piston plongeur (78) et, dès lors que l'ordre de grandeur de pression réelle (82, 84) dépasse l'ordre de grandeur de pression de comparaison, en tenant compte d'un écart de l'ordre de grandeur de pression réelle (82, 84) d'avec l'ordre de grandeur de pression de comparaison, pour envoyer au moins un signal de commande de pression (86) à au moins un composant (20, 28a, 28b, 34a, 34b, 42a, 42b) du système de frein, de sorte qu'au moins une pré-pression (p, pv) peut être réduite dans le circuit de frein à l'aide de l'au moins un composant (20, 28a, 28b, 34a, 34b, 42a, 42b) du système de frein commandé par l'au moins un signal de commande de pression (86).

9. Dispositif de commande selon la revendication 8, le dispositif de commande étant conçu pour envoyer au moins un signal de commande de soupape prenant la forme de l'au moins un signal de commande de pression (86) à au moins un dispositif de soupape (26a, 26b, 28a, 28b, 34a, 34b) du système de frein avant l'envoi du signal de commande de piston plongeur (78) et l'au moins un dispositif de soupape (26a, 26b, 28a, 28b, 34a, 34b) pouvant être commandé dans un état au moins en partie ouvert à l'aide de l'au moins un signal de commande de soupape.

10. Dispositif de commande selon la revendication 9, le dispositif de commande (76) étant conçu pour envoyer l'au moins un signal de commande de soupape à au moins une soupape de sortie à volant (34a, 34b), à au moins une soupape de commutation de haute pression (28a, 28b) et/ou à au moins une soupape de commutation (26a, 26b) avant l'envoi du signal de commande de piston plongeur (78).

11. Dispositif de commande selon l'une quelconque des revendications 8 à 10, le dispositif de commande (76) étant conçu pour envoyer un signal de commande d'amplificateur de force de freinage prenant la forme de l'au moins un signal de commande de pression (86) à un dispositif amplificateur de force de freinage (20) du système de frein avant l'envoi du signal de commande de piston plongeur (78) et le dispositif amplificateur de force de freinage (20) pouvant être excité de telle sorte, à l'aide du signal de commande d'amplificateur de force de freinage, qu'une force de soutien au freinage exercée sur au moins un piston mobile d'un maître-cylindre de frein (12) du système de frein à l'aide du dispositif amplificateur de force de freinage (20) du système de frein peut être réduite.

12. Dispositif de commande selon l'une quelconque des revendications 9 ou 10, le dispositif de commande (76) étant en outre conçu pour envoyer un signal d'adaptation de contre-pression au dispositif amplificateur de force de freinage (20) du système de frein et le dispositif amplificateur de force de freinage (20) pouvant être commandé de telle sorte à l'aide du signal d'adaptation de contre-pression qu'une réduction d'une force de rappel, provoquée par la réduction au moins de la pré-pression et exercée sur l'au moins un piston mobile du maître-cylindre de frein (12), peut être compensée au moins en partie par la réduction de la force de soutien au freinage du dispositif amplificateur de force de freinage (20) du système de frein.

13. Dispositif de commande selon l'une quelconque des revendications 8 à 12, le dispositif de commande (76) étant en outre conçu pour envoyer au moins un signal de commande d'augmentation de pression à au moins un composant du système de frein après l'envoi du signal de commande de piston plongeur (78) en tenant compte de l'écart de l'ordre de grandeur de pression réelle (82, 84) d'avec l'ordre de grandeur de pression de comparaison et/ou de l'au moins un signal de commande de pression (86), de sorte qu'au moins la pré-pression peut être augmentée d'une différence de pression dans le circuit de frein à l'aide de l'au moins un composant du système de frein commandé par l'au moins un signal de commande d'augmentation de pression.

14. Système de frein pour un véhicule équipé d'un dispositif à piston plongeur (10) **caractérisé par** un dispositif de commande selon l'une quelconque des revendications 8 à 13.
